# FASCICULE DE BREVET EUROPEEN

(11) **EP 3 871 005 B1**
(45) Date de publication et mention de la délivrance du brevet: **09.08.2023**
(21) Numéro de dépôt: 19813625.1
(22) Date de dépôt: 18.10.2019
(51) Int. Cl.: G01S 13/89, G01S 13/93, G01S 13/87, G01C 21/16, G01C 21/00, G01S 13/937, G01S 13/60

(54) **PROCÉDÉ DE CORRECTION D'UNE POSITION PRÉCÉDEMMENT ESTIMÉE D'UN VÉHICULE**
VERFAHREN ZUR KORREKTUR EINER ZUVOR GESCHÄTZTEN POSITION EINES FAHRZEUGS
METHOD FOR CORRECTING A PREVIOUSLY ESTIMATED POSITION OF A VEHICLE

(30) Priorité: 22.10.2018 FR 1859750
(43) Date de publication de la demande: 01.09.2021
(73) Titulaire: EXAIL, 78100 Saint-Germain-en-Laye (FR)
(72) Inventeur: HUBERT, Jean-Michel, 78100 Saint-Germain-en-Laye (FR); DE BECDELIEVRE, Hugues, 78100 Saint-Germain-en-Laye (FR)
(74) Mandataire: Jacobacci Coralis Harle
(86) Numéro de dépôt international: PCT/FR2019/052483
(87) Numéro de publication internationale: WO 2020/084234

(56) Documents cités:
- EP-A1- 3 029 487
- FR-A1- 2 997 182
- US-A- 5 485 384
- JUNGWOOK HAN ET AL: "GPS-less Coastal Navigation using Marine Radar for USV Operation", IFAC-PAPERSONLINE-8TH IFAC SYMPOSIUM ON ADVANCES IN AUTOMOTIVE CONTROL AAC 2016, NORRKÖPING, SWEDEN, 20-23 JUNE 2016, vol. 49, no. 23, 1 janvier 2016 (2016-01-01), pages 598-603, XP055605331, ISSN: 2405-8963, DOI: 10.1016/j.ifacol.2016.10.500
- HONGJIE MA ET AL: "Radar Image-Based Positioning for USV Under GPS Denial Environment", IEEE TRANSACTIONS ON INTELLIGENT TRANSPORTATION SYSTEMS, vol. 19, no. 1, 1 janvier 2018 (2018-01-01), pages 72-80, XP055605390, Piscataway, NJ, USA ISSN: 1524-9050, DOI: 10.1109/TITS.2017.2690577

## Description

### DOMAINE TECHNIQUE AUQUEL SE RAPPORTE L'INVENTION

La présente invention concerne de manière générale le positionnement d'un véhicule dans son environnement.

Elle concerne plus particulièrement un procédé de correction d'une position précédemment estimée d'un véhicule mobile. Elle concerne également un véhicule équipé d'un système RADAR et d'un calculateur adapté à mettre en oeuvre un tel procédé de correction.

L'invention trouve une application particulièrement avantageuse dans le recalage d'une centrale inertielle équipant un navire.

### ARRIERE-PLAN TECHNOLOGIQUE

Les navires de grandes tailles sont actuellement équipés de systèmes de géolocalisation par satellites du type GPS ou Galileo, leur permettant de déterminer avec précision leurs positions sur le globe terrestre.

Ces systèmes de géolocalisation présentent toutefois trois limites bien connues.

La première limite est qu'ils peuvent être intentionnellement brouillés par le fournisseur du système, notamment dans les zones de conflit. Il n'est alors plus possible de pénétrer dans de telles zones sans risque.

La seconde limite est que ces systèmes peuvent être leurrés, ce qui est susceptible de conduire au naufrage du navire.

La troisième limite est qu'il arrive que les navires se trouvent dans des environnements gênants, tels que des fiords, ne leur permettant plus de recevoir les données émises par les satellites.

Il est donc connu d'équiper un navire, en sus de ce système de navigation, d'une centrale inertielle. De par son principe intrinsèque de fonctionnement, une telle centrale inertielle ne peut en effet être ni brouillée, ni leurrée, ni gênée par l'environnement.

Une telle centrale inertielle est en mesure de déterminer l'accélération du navire dans les trois dimensions de l'espace et d'en déduire sa vitesse. Par conséquent, connaissant la position de départ du navire et sa vitesse initiale, il est possible de déterminer à l'aide de la seule centrale inertielle la position du navire à tout instant.

L'inconvénient majeur d'une telle centrale inertielle est que les résultats qu'elle fournit présentent toujours une dérive dans le temps. Ainsi, si le calcul de la position du navire souffre initialement d'erreurs très restreintes, ces erreurs s'accumulent dans le temps, ce qui à terme aboutit à des résultats aberrants.

Pour minimiser cette dérive, il est alors connu de recaler régulièrement la centrale inertielle en utilisant les données issues du système de géolocalisation. Mais ici encore, ce recalage n'est efficace qu'à la condition que ces données soient accessibles et qu'elles ne soient ni brouillées, ni leurrées.

On connaît du document US 5 485 384 un système de navigation pour missile. Selon ce document, le lancement d'un missile nécessite une étape de préparation du vol qui consiste, en s'appuyant sur la mission assignée à l'engin, à préparer des cartes numériques et à les charger dans la mémoire de l'engin. Au cours du vol, la navigation de l'engin est assurée par la centrale inertielle de guidage. Il est précisé que des erreurs inertielles peuvent apparaître. Alors, le capteur radar réalise, à des instants et sous des conditions géométriques fixés par un scénario de recalage, une image radar du terrain au voisinage du point survolé. Puis la position de l'engin est recalée grâce à une mise en coïncidence de l'image radar avec la carte numérique embarquée.

On connaît par ailleurs du document EP 3 029 487 un procédé de localisation d'un navire permettant de répondre au problème de manque de fiabilité des coordonnées de géolocalisation (GNSS). Dans ce document, la solution consiste à acquérir un image RADAR, à détecter la position des côtes sur cette image, à calculer la similarité entre cette image et un ensemble de données de cartographie, puis, si le niveau de similarité est supérieur à un seuil, à en déduire la position du navire.

### OBJET DE L'INVENTION

Afin de remédier à cet inconvénient, la présente invention propose de recaler la centrale inertielle à l'aide non plus d'une position fournie par un système de géolocalisation, mais plutôt à l'aide d'images fournies par un système RADAR équipant le véhicule.

Plus particulièrement, on propose selon l'invention un procédé de correction conforme à la revendication 1.

Ainsi, grâce à l'invention, on compare l'image RADAR réelle (reçue du système RADAR) avec l'image RADAR simulée (celle qu'on devrait recevoir du système RADAR si la position estimée du véhicule était exacte). La comparaison de ces deux images permet de déterminer si la position estimée est exacte et, si tel n'est pas le cas, quelle est la position exacte du véhicule.

D'autres caractéristiques avantageuses et non limitatives du procédé de correction conforme à l'invention sont définies dans les revendications 2 à 8.

L'invention concerne également un véhicule qui est un navire situé sur la mer, équipé d'un système RADAR et d'un calculateur adapté à mettre en oeuvre un procédé de correction tel que précité.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique de côté d'un navire,
- la figure 2 illustre un exemple d'image RADAR réelle obtenue par un système RADAR équipant le navire de la figure 1, et
- la figure 3 illustre un exemple d'image RADAR simulée élaborée par un calculateur équipant le navire de la figure 1.

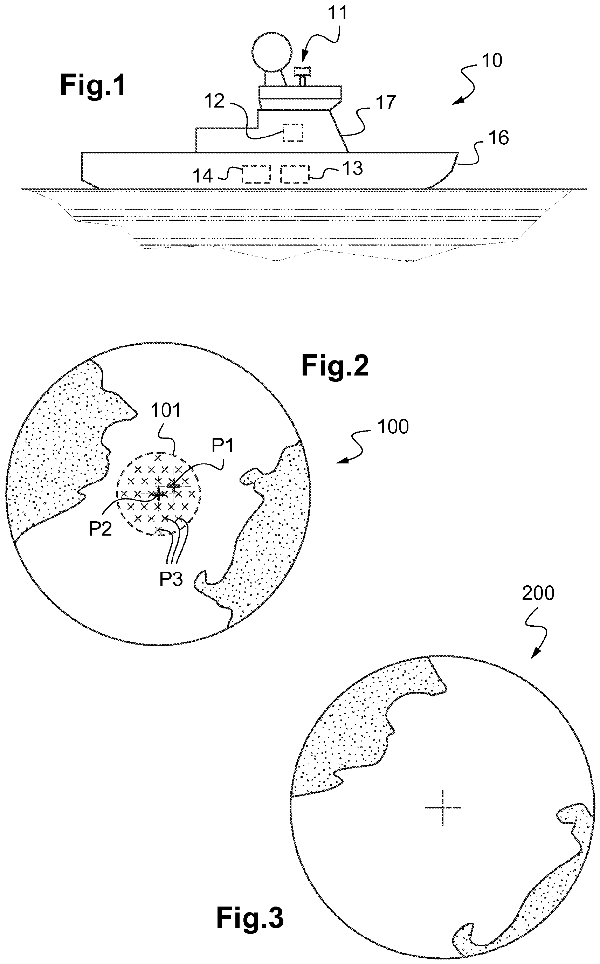

Sur la figure 1, on a représenté un véhicule mobile. Il s'agit ici d'un bateau, et plus précisément d'un navire 10 adapté à naviguer sur mers ouvertes. En variante, il pourrait s'agir d'un autre type de véhicule (sous-marin, avion...).

Ce navire 10 comporte classiquement une coque 16 surmontée d'une passerelle 17.

Le navire 10 comporte par ailleurs, au-dessus de la passerelle 17, un système RADAR 11.

Ce système RADAR 11 est plus spécifiquement conçu pour utiliser les ondes électromagnétiques afin de détecter la présence de côtes situées à proximité du navire 10 et afin de déterminer leurs positions.

Il s'agit ici d'un système RADAR de navigation maritime standard, utilisant la bande de fréquences « X-band ».

En variante, on pourrait utiliser un système RADAR « S-band », mais la précision obtenue dans le cadre du procédé décrit ci-dessous serait moins bonne. Il faudrait alors employer des marges de sécurité supérieures pour piloter le navire 10.

Le navire 100 comporte par ailleurs une centrale inertielle 13. Cette centrale inertielle 13 est ici du type FOG, c'est-à-dire à fibre optique. Il pourra par exemple s'agit d'une centrale inertielle telle que celles commercialisées par la société iXBlue, par exemple dans l'une des gammes suivantes : QUADRANS, OCTANS, PHINS, MARINS.

Cette centrale inertielle 13 est en mesure de déterminer l'accélération subie à chaque instant par le navire 10 dans les trois directions de l'espace. Elle comporte par ailleurs une unité électronique et/ou informatique adaptée à déduire de cette accélération la vitesse du navire 10.

Connaissant la position exacte, l'orientation exacte et la vitesse exacte du navire 10 à un instant donné, l'unité électronique et/ou informatique de la centrale inertielle 13 est également en mesure d'en déduire une position estimée et une orientation estimée du navire 10 à tout instant.

L'estimation de cette position et de cette orientation a toutefois tendance à dériver dans le temps, du fait d'erreurs initialement très restreintes qui s'accumulent au cours du temps.

Ici, on considérera que la centrale inertielle est gyrocompassante, c'est-à-dire qu'elle est en mesure de détecter le Nord géographique. De ce fait, la centrale inertielle 13 sera en mesure de corriger l'orientation estimée du navire 10.

Pour corriger la position estimée du navire 10 (on parle de recalage de la centrale inertielle 13), le navire 10 comporte un calculateur 12 connecté au système RADAR 11 et à la centrale inertielle 13.

Ce calculateur 12 est prévu pour recueillir les images RADAR réelles obtenues par le système RADAR 11 ainsi que la position estimée du navire 10 obtenue par la centrale inertielle 13.

Il comporte au moins un processeur (CPU), au moins une mémoire et différentes interfaces d'entrée et de sortie lui permettant de communiquer avec le système RADAR 11 et avec la centrale inertielle 13.

On notera que si, ici, le calculateur 12 est distinct de la centrale inertielle 13, il pourra en variante être intégré à celle-ci.

Grâce à sa mémoire, le calculateur mémorise des données utilisées dans le cadre du procédé de correction de la position estimée décrit ci-après.

Il mémorise notamment un modèle cartographique de l'environnement du navire 10. En pratique, ce modèle cartographique est un modèle numérique de terrain 14, par exemple du type SRTM (de l'anglais « Shuttle Radar Topography Mission ») Un tel modèle numérique de terrain 14 est constitué de fichiers matriciels et vectoriels topographiques, qui sont fournis par des agences américaines et qui donnent l'altitude du relief sur une majeure partie du globe terrestre.

Le calculateur 12 mémorise également une application informatique constituée de programmes d'ordinateur comprenant des instructions dont l'exécution par le processeur permet la mise en oeuvre par le calculateur du procédé de correction de la position estimée du navire 10.

Selon l'invention, ce procédé de correction comporte cinq étapes principales, à savoir :
- une étape de réception d'une image RADAR réelle 100,
- une étape d'acquisition d'une position estimée P2 du navire 10,
- une étape d'élaboration d'une image RADAR simulée 200 en fonction de la position estimée P2 du navire 10 et du modèle numérique de terrain 14,
- une étape de comparaison de l'image RADAR réelle 100 et de l'image RADAR simulée 200, et
- une étape de correction de la position estimée P2 du navire 10 en fonction du résultat de ladite comparaison.

Ce procédé est ici mis en oeuvre automatiquement, c'est-à-dire sans instruction expresse d'un individu, dès lors que la côte est en vue sur l'image RADAR réelle 100.

Au cours de la première étape dite de réception, le système RADAR 11 élabore une image RADAR représentant la position des différents obstacles détectés autour du navire 10 puis il la transmet au calculateur 12. Cette étape est opérée de façon classique.

L'image ainsi acquise, ci-après appelée image RADAR réelle 100, est donc une image brute non retraitée par le calculateur 12.

Un exemple d'image RADAR réelle 100 est représenté sur la figure 2. La croix centrale représente la position exacte P1 du navire 10 et les courbes représentent les côtes situées à proximité du navire 10. Dans cet exemple, le navire 10 passe dans un chenal.

Au cours de la seconde étape dite d'acquisition, la centrale inertielle 13 calcule une estimation de la position du navire 10, puis transmet cette position estimée au calculateur 12.

Ici, la centrale inertielle 13 transmet également au calculateur 12 d'autres informations, parmi lesquelles :
- l'orientation estimée du navire 10 par rapport au Nord,
- l'angle de tangage du navire 10, et
- l'angle de roulis du navire 10.

La position estimée P2 est ici exprimée par une latitude et une longitude, en degrés, minutes et secondes.

Comme le montre la figure 2, la position estimée P2 du navire 10 est en général décalée par rapport à la position exacte P1 du navire 10, du fait de la dérive des calculs effectués par la centrale inertielle 13.

En pratique, la dérive maximum de la centrale inertielle 13 est connue. Autrement formulé, à défaut de connaître la position exacte P1 du navire 10, la centrale inertielle 13 est en mesure de savoir à tout instant dans quelle zone se trouve le navire 10. Sur la figure 2, on a illustré cette zone par un disque 101 qui est centré autour de la position estimée P2 (figure 2) et dont le rayon dépend du temps passé depuis la dernière position exacte connue du navire 10.

Ici, le calculateur 12 va alors discrétiser cette zone en une pluralité de positions possibles P3 que le navire 10 peut présenter.

Pour cela, le calculateur 12 « maille » le disque 101 et définit une position possible P3 au croisement de chaque maille. La finesse du maillage (c'est-à-dire la distance entre les positions possibles) est ici prédéfinie, en fonction de la précision souhaitée. Elle peut par exemple être comprise entre 1 et 100 mètres.

En variante, on peut prévoir que cette finesse de maillage soit variable, en fonction par exemple de la distance séparant le navire 10 de la côte.

Encore en variante, le calculateur pourrait définir autrement les positions possibles, par exemple en utilisant un « filtre de masse ponctuelle » (plus connu sous l'appellation anglaise « Point Mass Filter » ou « PMF ») dont on expliquera à l'issu de cet exposé comment il sera alimenté.

Au cours de la troisième étape dite d'élaboration, le calculateur 12 va générer des images RADAR simulées 200.

Une image RADAR simulée 200 sera élaborée pour chaque position possible P3 du navire 10, afin de représenter l'image RADAR qui devrait être reçue du système RADAR 11 si le navire 10 se trouvait exactement sur la position possible P3 considérée.

Chaque image RADAR simulée 200 est élaborée en fonction au moins de la position possible P3 qui lui est associée et en fonction des données fournies par le modèle numérique de terrain 14.

Ici, chaque image RADAR simulée 200 est élaborée en fonction également de l'angle de roulis et de l'angle de tangage du navire 10.

Plus précisément, pour élaborer une image RADAR simulée 200, le calculateur 12 commence par relever dans le modèle numérique de terrain 14 la position des côtes situées dans un cercle qui est centré sur la position possible P3 considérée du navire 10 et dont le rayon correspond à la portée utile du système RADAR 11.

Il peut ainsi tracer une ébauche d'image RADAR.

Il peut ensuite corriger cette ébauche en tenant compte de l'angle de roulis et de l'angle de tangage du navire 10. En effet, le roulis et le tangage modifient l'orientation du système RADAR 11 par rapport à la mer, ce qui affecte les images RADAR réelle que ce système acquiert. Cette correction vise donc à affecter pareillement l'ébauche d'image RADAR.

Une fois l'ébauche corrigée, le calculateur 12 obtient ainsi une image RADAR simulée 200.

Une telle image est représentée sur la figure 3. On observe qu'elle est différente de l'image RADAR réelle de la figure 2, puisqu'elle présente un léger décalage en position, un léger décalage en orientation, et un défaut d'échelle.

En variante, cette image RADAR simulée 200 pourrait être encore corrigée, pour tenir compte de l'état de la mer ou de la météo, qui sont également susceptibles d'affecter les images RADAR réelle 100 que le système RADAR 11 acquiert.

On notera ici que les calculs exacts d'élaboration des images RADAR simulées 200 ne seront pas ici décrits, puisqu'ils varient en fonction de nombreux facteurs tels que le type de système RADAR 11 choisi, la position du système RADAR 11 sur le navire 10... Un algorithme de génération d'images RADAR simulées 200 devra donc être élaboré pour chaque type de navire, à la suite d'une campagne de tests en conditions réelles permettant de recueillir les données nécessaires à l'élaboration de cet algorithme.

Ces tests en conditions réelles permettront ici en outre de déterminer un modèle d'erreur lié à l'inexactitude de l'algorithme de génération d'image RADAR simulée 200. Ce modèle d'erreur permettra de calculer, lors de la génération de chaque image RADAR simulée 200, un indice de confiance dans la justesse de cette image.

Cet indice de confiance pourra par exemple être fonction de l'état de la mer et/ou de la météo et/ou de la quantité de côtes détectées par le système RADAR 11. L'utilité de cet indice de confiance sera détaillée ci-après.

En résumé, lors de cette troisième étape, le calculateur 12 pourra calculer, pour chaque position possible P3 du navire 10, une image RADAR simulée 200 associée à un indice de confiance.

Au cours de la quatrième étape dite de comparaison, le calculateur compare chaque image RADAR simulée 200 (associée à chaque position possible P3) avec l'image RADAR réelle 100.

Cette étape de comparaison est réalisée au moyen de calculs de corrélation. Ces calculs visent à déterminer dans quelle mesure les images RADAR simulées 200 et réelle 100 se superposent bien.

Pour cela, le calculateur considère tout d'abord une première image RADAR simulée 200.

Il calcule alors le niveau de corrélation entre l'image RADAR réelle 100 et cette première image RADAR simulée 200.

Puis il répète ces opérations avec chacune des autres images RADAR simulées 200.

Il sélectionne ensuite l'image RADAR simulée 200 pour laquelle le niveau de corrélation avec l'image RADAR réelle 100 est le plus élevé. Cette image RADAR simulée 200 sera ci-après appelée « image RADAR sélectionnée ».

A ce stade, le calculateur peut donc estimer que la position possible P3 associée à l'image RADAR sélectionnée est la position possible P3 qui est la plus proche de la position exacte P1 du navire 10.

De façon préférentielle, le calculateur 12 va affiner la précision de la recherche de la position exacte P1 du navire 10. Pour cela, le calculateur 12 calcule plusieurs niveaux de corrélation entre l'image RADAR réelle 100 et l'image RADAR sélectionnée, en faisant toutefois varier à chaque fois l'un au moins des paramètres suivants :
- l'angle d'orientation relatif entre l'image RADAR réelle 100 et l'image RADAR sélectionnée,
- la position relative entre l'image RADAR réelle 100 et l'image RADAR sélectionnée,
- le facteur d'échelle relatif entre l'image RADAR réelle 100 et l'image RADAR sélectionnée.

Ce triplet de paramètre permet en effet de jouer sur la manière selon laquelle les deux images sont superposées avant d'être corrélées.

Sélectionner le triplet de paramètre pour lequel le niveau de corrélation est le plus élevé permet donc de trouver la position dans laquelle les deux images se superposent le mieux.

Au cours de la cinquième étape dite de correction, le calculateur 12 corrige alors la position du navire 10, en considérant désormais que la position exacte P1 du navire 10 est la position possible P3 associée à l'image RADAR sélectionnée, corrigée en fonction du triplet de paramètres sélectionné.

Puis, le calculateur 12 transmet à la centrale inertielle 13 un signal permettant de recaler cette dernière.

Ce signal comprend au moins la position corrigée du navire et l'indice de confiance associé à la position possible P3 sélectionnée.

Ces deux données sont alors stockées dans la centrale inertielle 13 pour que cette dernière puisse déterminer par la suite de nouvelles estimations de sa position.

On notera ici que la centrale inertielle 13 utilise, pour déterminer à chaque instant une nouvelle estimation de la position du navire 10, une méthode de calcul basée sur un observateur d'état. Cet observateur d'état est ici un filtre de Kalman, qui peut alors être recalé par la nouvelle position obtenue et qui tient compte de l'indice de confiance reçu.

La présente invention n'est nullement limitée aux modes de réalisation décrits et représentés, mais l'homme du métier saura y apporter toute variante conforme à l'invention.

Ainsi, dans le mode de réalisation décrit supra, seule la position possible sélectionnée P3 et le triplet de paramètres associé sont utilisés pour corriger la position du navire qui avait été estimée par la centrale inertielle 13.

En variante, le calculateur 12 pourrait garder en mémoire d'autres positions possibles P3, notamment celles associées à des niveaux de corrélation élevés, de façon à alimenter le filtre PMF précité par de nouvelles probabilités de positions possibles P3 (le poids de ces probabilités étant formé par le niveau de corrélation correspondant). Ainsi ce filtre PMF permettra-t-il à chaque instant de fournir de nouvelles positions possibles P3 du navire 10, ces positions délimitant une flaque d'incertitude dans laquelle se trouve la position réelle du navire 10.

Selon une autre variante de l'invention, on pourrait prendre en compte les erreurs de la centrale inertielle et du système RADAR afin de corriger la position estimée du véhicule. A titre d'exemple, dans le cas où on utilise un filtre PMF, la taille de la flaque d'incertitude pourra varier en fonction :
- d'un coefficient d'erreur associé à la centrale inertielle (ce coefficient d'erreur étant fourni par le constructeur de la centrale) et/ou
- d'un coefficient d'erreur associé au système RADAR (ce coefficient d'erreur étant fourni par le constructeur du système RADAR et étant relatif aux erreurs de réception de signaux et/ou aux erreurs d'élaboration d'images RADAR).

## Revendications

1. Procédé de correction de la position d'un véhicule (10) qui est un navire situé sur la mer, comprenant :
- une étape de réception, par un système RADAR (11) équipant ledit véhicule (10), d'une image RADAR réelle (100),
- une étape d'acquisition, par un calculateur (12) équipant ledit véhicule (10), d'une position estimée du véhicule (10),
**caractérisé en ce qu'**il comporte en outre :
- une étape d'élaboration par le calculateur (12) d'une image RADAR simulée (200) en fonction de la position estimée du véhicule (10) et d'un modèle cartographique (14) de l'environnement du véhicule (10),
- une étape de comparaison de l'image RADAR réelle (100) et de l'image RADAR simulée (200), et
- une étape de correction de la position estimée du véhicule (10) en fonction du résultat de ladite comparaison,
dans lequel les étapes d'acquisition, d'élaboration et de comparaison sont répétées au cours de pas de temps successifs avec différentes positions estimées du véhicule (10),
dans lequel, à l'étape de correction d'un premier pas de temps, il est prévu de définir une flaque d'incertitude correspondant à une zone dans laquelle le véhicule (10) se trouve,
dans lequel, à un second pas de temps, l'étape d'acquisition est répétée en utilisant plusieurs positions estimées du véhicule (10) choisies de façon à être situées dans ladite flaque d'incertitude,
dans lequel à l'étape de correction, la position estimée du véhicule est corrigée en fonction des résultats desdites comparaisons, et
dans lequel, après l'étape de réception, il est prévu de déterminer si une côte maritime est visible sur l'image RADAR réelle (100), et dans lequel, si tel est le cas, les étapes d'acquisition, d'élaboration, de comparaison et de correction sont mises en oeuvre automatiquement par le calculateur (12).

2. Procédé de correction selon la revendication précédente, dans lequel, à l'étape de comparaison, il est prévu de calculer plusieurs niveaux de corrélation entre l'image RADAR réelle (100) et l'image RADAR simulée (200), en faisant varier entre chaque calcul au moins l'un des paramètres suivants :
- l'angle d'orientation relatif entre l'image RADAR réelle (100) et l'image RADAR simulée (200),
- la position relative entre l'image RADAR réelle (100) et l'image RADAR simulée (200),
- le facteur d'échelle relatif entre l'image RADAR réelle (100) et l'image RADAR simulée (200).

3. Procédé de correction selon la revendication 1 ou 2, dans lequel à chaque étape de comparaison, il est prévu de calculer au moins un niveau de corrélation entre l'image RADAR réelle (100) et l'image RADAR simulée (200), et dans lequel à l'étape de correction, on sélectionne l'image RADAR simulée (200) pour laquelle le niveau de corrélation calculé est le plus élevé.

4. Procédé de correction selon l'une des revendications précédentes, dans lequel à l'étape d'élaboration, l'image RADAR simulée (100) est déterminée en fonction également de l'état de la mer et/ou de la posture du bateau.

5. Procédé de correction selon l'une des revendications précédentes, dans lequel, à l'étape d'acquisition, la position estimée du véhicule (10) est obtenue via une centrale inertielle (13) équipant le véhicule (10).

6. Procédé de correction selon la revendication précédente, dans lequel la position estimée du véhicule (10) est corrigée compte tenu d'un facteur d'erreur relatif à :
- une erreur de détermination de position par la centrale inertielle (13) et/ou à
- une erreur de réception du système RADAR (11) et/ou à
- une erreur d'élaboration de l'image RADAR réelle (100) par le système RADAR (11).

7. Procédé de correction selon l'une des revendications précédentes, dans lequel, à l'étape de correction, une centrale inertielle (13) équipant le véhicule (10) est recalée en fonction de la position estimée corrigée du véhicule (10).

8. Procédé de correction selon la revendication précédente, dans lequel, à l'étape d'élaboration, une erreur liée à la précision de l'élaboration de l'image RADAR simulée (200) est déterminée, et dans lequel à l'étape de correction, la centrale inertielle (13) est recalée en fonction de l'erreur déterminée.

9. Véhicule (10) qui est un navire situé sur la mer, comprenant un système RADAR (11) et un calculateur (12), **caractérisé en ce qu'**il est adapté à mettre en oeuvre un procédé de correction tel que défini dans l'une des revendications précédentes.

## Patentansprüche

1. Verfahren zur Korrektur einer zuvor geschätzten Position eines Fahrzeugs (10), das ein auf dem Meer befindliches Schiff ist, mit
- einem Schritt des Empfangens eines reellen RADAR-Bilds (100) durch ein RADAR-System (11), mit dem das Fahrzeug (10) ausgestattet ist,
- einem Schritt des Erfassens einer geschätzten Position des Fahrzeugs (10) durch einen Rechner (12), mit dem das Fahrzeug (10) ausgestattet ist,
**dadurch gekennzeichnet, daß** es außerdem
- einen Schritt des Erarbeitens eines simulierten RADAR-Bilds (200) durch den Rechner (12) in Abhängigkeit von der geschätzten Position des Fahrzeugs (10),
- einen Schritt des Vergleichens des reellen RADAR-Bilds (100) mit dem simulierten RADAR-Bild (200) und
- einen Schritt des Korrigierens der geschätzten Position des Fahrzeugs (10) in Abhängigkeit vom Ergebnis des Vergleichs
aufweist,
wobei die Schritte des Erfassens, des Erarbeitens und des Vergleichens im Verlauf von aufeinanderfolgenden zeitlichen Schritten mit verschiedenen geschätzten Positionen des Fahrzeugs (10) wiederholt werden,
wobei beim Korrekturschritt eines ersten zeitlichen Schritts vorgesehen ist, einen Unsicherheitsbereich zu definieren, der einem Gebiet entspricht, in dem sich das Fahrzeug (10) befindet,
wobei der Schritt des Erfassens bei einem zweiten zeitlichen Schritt wiederholt wird und dabei verschiedene geschätzte Positionen des Fahrzeugs (10) verwendet werden, die so ausgewählt sind, daß sie in dem Unsicherheitsbereich liegen,
wobei beim Schritt des Korrigierens die geschätzte Position des Fahrzeugs in Abhängigkeit von den Ergebnissen der Vergleiche korrigiert wird und
wobei nach dem Schritt des Empfangens vorgesehen ist, zu bestimmen, ob auf dem reellen RADAR-Bild (100) eine Meeresküste sichtbar ist, und wobei, falls dies so ist, die Schritte des Erfassens, des Erarbeitens, des Vergleichens und des Korrigierens durch den Rechner (12) automatisch durchgeführt werden.

2. Korrekturverfahren gemäß dem vorangehenden Anspruch, wobei beim Schritt des Vergleichens vorgesehen ist, mehrere Korrelationsniveaus zwischen dem reellen RADAR-Bild (100) und dem simulierten RADAR-Bild (200) zu errechnen und dabei zwischen jeder Berechnung mindestens einen der folgenden Parameter zu variieren:
- den relativen Ausrichtungswinkel zwischen dem reellen RADAR-Bild (100) und dem simulierten RADAR-Bild (200),
- die relative Position zwischen dem reellen RADAR-Bild (100) und dem simulierten RADAR-Bild (200),
- den relativen Maßstabsfaktor zwischen dem reellen RADAR-Bild (100) und dem simulierten RADAR-Bild (200).

3. Korrekturverfahren gemäß Anspruch 1 oder 2, wobei bei jedem Schritt des Vergleichens vorgesehen ist, mindestens ein Korrelationsniveau zwischen dem reellen RADAR-Bild (100) und dem simulierten RADAR-Bild (200) zu berechnen, und wobei beim Korrekturschritt das simulierte RADAR-Bild (200) ausgewählt wird, für das das berechnete Korrelationsniveau das höchste ist.

4. Korrekturverfahren gemäß einem der vorangehenden Ansprüche, wobei das simulierte RADAR-Bild (200) beim Schritt des Erarbeitens auch in Abhängigkeit vom Zustand des Meeres und/oder der Lage des Schiffs bestimmt wird.

5. Korrekturverfahren gemäß einem der vorangehenden Ansprüche, wobei die geschätzte Position des Fahrzeugs (10) beim Schritt des Erfassens über ein Inertialsystem (13) erhalten wird, mit dem das Fahrzeug (10) ausgestattet ist.

6. Korrekturverfahren gemäß dem vorangehenden Anspruch, wobei die geschätzte Position des Fahrzeugs (10) unter Berücksichtigung eines Fehlerfaktors korrigiert wird, der sich auf
- einen Fehler des Bestimmens der Position durch das Inertialsystem (13) und/oder auf
- einen Empfangsfehler des RADAR-Systems (11) und/oder auf
- einen Fehler des Erarbeitens des reellen RADAR-Bilds (100) durch das RADAR-System (11)
bezieht.

7. Korrekturverfahren gemäß einem der vorangehenden Ansprüche, wobei ein Inertialsystem (13), mit dem das Fahrzeug (10) ausgestattet ist, beim Korrekturschritt in Abhängigkeit von der korrigierten geschätzten Position des Fahrzeugs (10) neu eingestellt wird.

8. Korrekturverfahren gemäß dem vorangehenden Anspruch, wobei beim Schritt des Erarbeitens ein mit der Genauigkeit des Erarbeitens des simulierten RADAR-Bilds (200) verbundener Fehler bestimmt wird und wobei das Inertialsystem (13) beim Korrekturschritt in Abhängigkeit vom bestimmten Fehler neu eingestellt wird.

9. Fahrzeug (10), das ein auf dem Meer befindliches Schiff ist, das ein RADAR-System (11) und einen Rechner (12) aufweist, **dadurch gekennzeichnet, daß** es dazu ausgelegt ist, ein wie in einem der vorangehenden Ansprüche definiertes Korrekturverfahren durchzuführen.

## Claims

1. A method for correcting the position of a vehicle (10) that is a ship being on the sea, comprising:
- a step of reception, by the RADAR system (11) installed on said vehicle (10), of a real RADAR image (100),
- a step of acquisition, by a computer (12) installed on said vehicle (10), of an estimated position of the vehicle (10),
**Characterized in** tat it further comprises:
- a step of elaboration, by the computer (12), of a simulated RADAR image (200) as a function of the estimated position of the vehicle (10) and of a cartographic model (14) of the vehicle (10) environment,
- a step of comparison of the real RADAR image (100) and the simulated RADAR image (200), and
- a step of correction of the estimated position of the vehicle (10) as a function of the comparison result,
wherein the acquisition, elaboration and comparison steps are repeated with different estimated position of the vehicle (10),
wherein at the correction step during a first time step, it is provided to define a pool of uncertainty corresponding to a zone in which the vehicle (10) is located,
wherein, during a second time step, the acquisition step is repeated using several estimated positions of the vehicle (10) located within said pool of uncertainty,
wherein, at the correction step, the estimated position of the vehicle is corrected as a function of the results of said comparisons, and
wherein after the reception step, it is provided to determine if a sea coast is visible on the real RADAR image (100), and wherein, if so, the acquisition, elaboration, comparison and correction steps are automatically implemented by the computer (12).

2. The correction method according to the preceding claim, wherein, at the comparison step, it is provided to calculate several levels of correlation between the real RADAR image (100) and the simulated RADAR image (200), by varying between each calculation at least one of the following parameters:
- the relative direction angle between the real RADAR image (100) and the simulated RADAR image (200),
- the relative position between the real RADAR image (100) and the simulated RADAR image (200),
- the relative scale factor between the real RADAR image (100) and the simulated RADAR image (200).

3. The correction method according to one of claims 1 or 2, wherein, at each comparison step, it is provided to calculate at least one level of correlation between the real RADAR image (100) and the simulated RADAR image (200), and wherein, at the correction step, the simulated RADAR image (200) for which the calculated level of correlation is the highest is selected.

4. The correction method according to any one of the preceding claims, wherein, at the elaboration step, the simulated RADAR image (100) is determined as a function also of the state of the sea and/or of the posture of the boat.

5. The correction method according to one of the preceding claims, wherein, at the acquisition step, the estimated position of the vehicle (10) is obtained via an inertial unit (13) installed on the vehicle (10).

6. The correction method according to the preceding claim, wherein the estimated position of the vehicle (10) is corrected in consideration of an error factor relating to:
- a error of position determination by the inertial unit (13) and/or
- a error of reception of the RADAR system (11) and/or
- an error of elaboration of the real RADAR image (100) by the RADAR system (11).

7. The correction method according to one of the preceding claims, wherein, at the correction step, an inertial unit (13) installed on the vehicle (10) is reset as a function of the corrected estimated position of the vehicle (10).

8. The correction method according to the preceding claim, wherein, at the elaboration step, an error linked to the accuracy of elaboration of the simulated RADAR image (200) is determined, and wherein, at the correction step, the inertial unit (13) is reset as a function of the determined error.

9. A vehicle (10) comprising a RADAR system (11) and a computer (12), **characterized in that** it is adapted to implement a correction method as defined in one of the preceding claims.
